# EUROPEAN PATENT SPECIFICATION

(11) **EP 1 749 845 B1**
(45) Date of publication and mention of the grant of the patent: **01.10.2008**
(21) Application number: 06253969.7
(22) Date of filing: 28.07.2006
(51) Int. Cl.: C08G 63/00, C08L 63/00, C08J 5/00

(54) **Composite materials and methods of making the same**
Verbund-Materialien und Herstellungsmethoden
Matériau composite et procédé de préparation

(30) Priority: 03.08.2005 US 705059
(43) Date of publication of application: 07.02.2007
(73) Proprietor: Rohm and Haas Company, Philadelphia, PA 19106-2399 (US)
(72) Inventor: Lundquist, Eric Gustave, Pennsylvania 19454 (US)
(74) Representative: Kent, Venetia Katherine

(56) References cited:
- WO-A2-03/104284
- US-A- 3 733 311

## Description

The present invention relates to composite materials and methods of making the same. In particular, the present invention relates to composite materials and to methods of making said materials with a formaldehyde-free binder composition.

The preparation of composite materials, for example, fiber structures (e.g., nonwoven fiber insulation) and shaped articles (e.g., fiberboard and chipboard) are conventionally made using phenol-formaldehyde (PF) resins or phenol-formaldehyde resins extended with urea (PFU).

One perceived concern with the use of PF or PFU resins is the potential for formaldehyde emissions during preparation of the resins, during manufacture of composite materials comprising the resins and during subsequent use of those composite materials. There is current legislation which limits formaldehyde emissions as well as proposed legislation which may seek to further limit or eliminate formaldehyde emissions.

One alternative to PF or PFU resins is disclosed in United States Patent Application Publication No. 2004/0034154 to Tutin et al. Tutin et al. disclose an aqueous binder composition for making glass fiber insulation products comprising an aqueous solution of a substantially infinitely water-dilutable or dispersible mixture of an epoxide and an epoxide crosslinking agent, wherein the epoxide is described as having at least two epoxy groups.

Another alternative to PF or PFU resins is disclosed in United States Patent Application Publication No. 2005/0059770 to Srinivasan et al. Srinivasan et al. disclose a water soluble adduct resulting from free radical solution polymerization of an unsaturated carboxylic acid monomer and an unsaturated hydroxyl monomer, wherein the polymerization is conducted in the presence of a chain transfer agent.

Nevertheless, there remains a need for identifying new composite materials that are formaldehyde-free and for new methods of making such composite materials using new formaldehyde-free binder compositions.

In one aspect of the present invention, there is provided a composite material comprising: (a) a substrate material selected from fibers, slivers, chips and combinations thereof; and, (b) a cured binder composition comprising a step-reaction copolymer produced from at least one cyclic anhydride and at least one epoxy alcohol, wherein one of the at least one epoxy alcohol has only one epoxy group; and, wherein the composite material comprises ≤ 40 wt% of the cured binder composition.

In another aspect of the present invention, there is provided a product comprising a composite material of the present invention.

In another aspect of the present invention, there is provided a method for preparing a composite material, comprising: (a) providing a binder composition comprising a step-reaction copolymer produced from at least one cyclic anhydride and at least one epoxy alcohol, wherein one of the at least one epoxy alcohol has only one epoxy group; (b) providing a substrate material selected from fibers, slivers, chips and combinations thereof; (c) applying the binder composition to the substrate material; and (d) curing the binder composition; wherein the composite material comprises ≤ 40 wt% of the cured binder composition.

The term **"step-reaction copolymer"** as used herein and in the appended claims refers to polymers prepared by a polymerization reaction that does not depend on chain-carrying free radicals or ions. Rather, step-reaction copolymers are prepared by polymerization reactions that occur in steps involving more than one functional group on at least one of the monomers.

The term **"copolymer"** as used herein and in the appended claims refers to polymers prepared using at least two different monomers.

The term "**curing**" as used herein and in the appended claims means a chemical or morphological change which is sufficient to alter the properties of the binder composition such as, for example, via covalent chemical reaction (e.g., crosslinking), ionic interaction or clustering, improved adhesion to the substrate material, phase transformation or inversion, hydrogen bonding, and combinations thereof.

The term "**aqueous**" as used herein and in the appended claims means water and mixtures composed substantially of water and water miscible solvents.

The term **"formaldehyde-free"** as used herein and in the appended claims refers to a composition that is substantially free from formaldehyde, and does not liberate a substantial amount of formaldehyde during drying and/or curing. Typically, less than 1 part per million formaldehyde, based on the weight of the composition, is present in a formaldehyde-free composition.

The term **"(meth)acrylic"** used herein and in the appended claims encompasses both methacrylic and acrylic.

In some embodiments of the present invention, the composite material comprises 0.5 to 40wt%, alternatively 1 to 40wt%, alternatively 1 to 30wt%, alternatively 1 to 20wt%, alternatively 5 to 15wt% of the cured binder composition.

In some embodiments of the present invention, the substrate material is selected from fibers, slivers, chips and combinations thereof. In some aspects of these embodiments, the substrate material is "**heat resistant**". The term "**heat resistant**" used herein and in the appended claims, in reference to a substrate material, means that the substrate material is substantially unaffected by exposure to temperatures ≥ 100°C, alternatively ≥ 120°C, alternatively from 100°C to 350°C; for a period of at least 3 seconds; alternatively of at least 30 minutes.

In some embodiments of the present invention, the composite material is fibers. In some aspects of these embodiments, the fibers are selected from natural fibers (e.g., sisal, jute, hemp, flax, cotton, coconut fibers, banana fibers); animal fibers (e.g., wool, hair); plastic fibers (e.g., polypropylene fibers, polyethylene fibers, polyvinyl chloride fibers, polyester fibers, polyamide fibers, polyacrylonitrile fibers); glass fibers; glass wool; mineral fibers; mineral wool; synthetic inorganic fibers (e.g., aramid fibers, carbon fibers); and combinations thereof. In some aspects of these embodiments, the fibers may include cellulose fibers, cellulose acetate fibers and fibers of esters and ethers of cellulose. In some aspects of these embodiments, the fibers are selected from mineral fibers, aramid fibers, ceramic fibers, metal fibers, carbon fibers, polyimide fibers, polyester fibers, rayon fibers, glass fibers, glass wool, mineral wool and combinations thereof. In some aspects of these embodiments, the fibers are selected from glass fibers, glass wool, mineral wool and combinations thereof. In some aspects of these embodiments, the fibers are glass fibers. In some aspects of these embodiments, the fibers are heat resistant.

In some embodiments of the present invention, the substrate material is selected from fibers, slivers, chips and combinations thereof, wherein the fibers, slivers and chips are comprised of wood, metal, metal oxides, plastic, minerals, glass and combinations thereof. In some aspects of these embodiments, the fibers, slivers, chips and combinations thereof are heat resistant.

In some embodiments of the present invention, the cured binder composition comprises a step-reaction copolymer produced from at least one cyclic anhydride and at least one epoxy alcohol, wherein the at least one cyclic anhydride is selected from maleic anhydride, itaconic anhydride and combinations thereof.

In some embodiments of the present invention, the cured binder composition comprises a step-reaction copolymer produced from at least one cyclic anhydride and at least one epoxy alcohol, wherein the at least one cyclic anhydride comprises at least two cyclic anhydrides, wherein one of the at least two cyclic anhydrides is selected from maleic anhydride, itaconic anhydride and combinations thereof; and one of the at least two cyclic anhydrides is selected from phthalic anhydride, tetrahydrophthalic anhydride, dodecenylsuccinic anhydride, chlorendic anhydride, pyromellitic anhydride, citraconic anhydride, hexahydrophthalic anhydride, endomethylene tetrahydrophthalic anhydride, tetrachlorophthalic anhydride and combinations thereof. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is maleic anhydride, itaconic anhydride or a combination thereof. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is maleic anhydride. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is itaconic anhydride. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is a combination of maleic anhydride and itaconic anhydride.

In some embodiments of the present invention, the cured binder composition comprises a step-reaction copolymer produced from at least one cyclic anhydride and at least one epoxy alcohol, wherein one of the at least one epoxy alcohol is selected from glycidol; a monoglycidyl ether of a polyhydric alcohol; a monoglycidyl ether of bisphenol A; a monoglycidyl ether of glycerol; a monoglycidyl ether of pentaerythritol; and, combinations thereof. In some aspects of these embodiments, the at least one epoxy alcohol is glycidol.

In some embodiments of the present invention, the cured binder composition comprises a step-reaction copolymer produced from at least one cyclic anhydride and at least one epoxy alcohol, wherein the at least one epoxy alcohol comprises at least two epoxy alcohols; and, wherein one of the at least two epoxy alcohols has only one epoxide group and one of the at least two epoxy alcohols has at least two epoxy groups. In some aspects of these embodiments, one of the at least two epoxy alcohols is selected from glycidol; a monoglycidyl ether of a polyhydric alcohol; a monoglycidyl ether of bisphenol A; a monoglycidyl ether of glycerol and a monoglycidyl ether of pentaerythritol; and, one of the at least two epoxy alcohols is selected from a diglycidyl ether of glycerol; a diglycidyl ether of pentaerythritol; a triglycidyl ether of pentaerythritol; 2,3-epoxy-1-butanol; 2,3-epoxy-1,4-butanediol; 3,4-epoxy-1-butanol; and, combinations thereof. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two epoxy alcohols is selected from an epoxy alcohol exhibiting only one epoxide group. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two epoxy alcohols is selected from glycidol; a monoglycidyl ether of a polyhydric alcohol; a monoglycidyl ether of bisphenol A; a monoglycidyl ether of glycerol and a monoglycidyl ether of pentaerythritol. Is some aspects of these embodiments, at least 50 mol%, alternatively at least 75 mol%, alternatively at least 80 mol%, alternatively at least 90 mol%, alternatively at least 95 mol%, alternatively at least 99 mol% of the at least two epoxy alcohols is glycidol.

In some embodiments of the present invention, the binder composition may further comprise a polymerization initiator. Polymerization initiators suitable for use with the present invention include any conventional initiator compatible with the step-reaction copolymer and the substrate material. In some aspects of these embodiments, the binder composition may comprise 0.5 to 10wt% (based on binder solids) of polymerization initiator. In some aspects of these embodiments, the polymerization initiator is a free radical initiator such as sodium persulfate, hydrogen peroxide and ammonium persulfate. When at least a portion of the step-reaction copolymer is ethylenically unsaturated, incorporation of a polymerization initiator such as a free radical initiator into the binder composition may enhance the degree and/or the rate of curing of the binder composition.

In some embodiments of the present invention, the binder composition may further comprise an accelerator. Accelerators suitable for use with the present invention include any conventional accelerators compatible with the step-reaction copolymer and the substrate material. In some aspects of these embodiments, the binder composition may comprise 0.01 to 10wt%, alternatively 0.1 to 5wt%, alternatively 0.5 to 2wt% (based on binder solids) of accelerator. In some aspects of these embodiments, the accelerator is selected from a tertiary amine (e.g., benzyl dimethylamine), an imidazole, an imidazoline, an urea, ammonium hydroxide, sodium hydroxide, sodium bicarbonate, a boron halide compound and combinations thereof.

In some embodiments of the present invention, the binder composition may further comprise a crosslinking agent. Crosslinking agents suitable for use with the present invention include any conventional crosslinking agents compatible with the step-reaction copolymer and the substrate material. In some aspects of these embodiments, the binder composition may comprise 1.0 to 10wt% (based on binder solids) of crosslinking agent. In some aspects of these embodiments, the crosslinking agent is selected from a vinyl monomer and a polyvinyl monomer. Vinyl monomers suitable for use with the present invention include, for example, styrene, which is conventionally used with polyester resins to enhance the degree of thermosetting. Polyvinyl monomers suitable for use with the present invention include, for example, diethylene glycol dimethacrylate and trimethylopropane triacrylate. In some aspects of these embodiments, the crosslinking agent is selected from a diol diacetoacetate (e.g., butane diol diacetoacetate and 1,6-hexanediol diacetoacetate); trimethylol propane triacetoacetate; pentaerythritol triacetoacetate; diacetoacetates (e.g., glycerol diacetoacetates); triacetoacetates (e.g., glycerol triacetoacetates); polyvinylalcohol acetoacetates and analogous malonate esters; acetoacetate functional castor oil; acetoacetate functional polyester polymer; acetoacetate functional polyesteramide polymer; acetoacetamide functional polyether polymer; acetoacetate functional (meth)acrylic polymer; cyanoacetamide functional (meth)acrylic polymer; cyanoacetate functional (meth)acrylic polymer; acetoacetate functional polybutadiene polymer; substituted and functionalized derivatives thereof; and combinations thereof

In some embodiments of the present invention, the binder composition may further comprise a silane coupling agent. Silane coupling agents suitable for use with the present invention include any conventional silane coupling agents compatible with the step-reaction copolymer and the substrate material. In some aspects of these embodiments, the binder composition may comprise 0.05 to 2wt%, alternatively 0.1 to 2wt%, 0.1 to 0.5wt% (based on binder solids) of silane coupling agent. In some aspects of these embodiments, the silane coupling agent is selected from aminopropyl silanes, trimethoxy silanes, epoxy containing silanes and combinations thereof. Some representative silane coupling agents include, for example, the organo silicon oils available from Dow-Corning Corporation; A0700, A0750 and A0800 available from Petrarch Systems; A1160 available from Dow Chemical Corporation; Silquest™ A-187 available from GE Silicones--OSi Specialties; and combinations thereof.

In some embodiments of the present invention, the binder composition may further comprise an additive. Additives suitable for use with the present invention include any conventional additives compatible with the step-reaction copolymer and the substrate material. In some aspects of these embodiments, the binder composition may further comprise an optional additive, wherein the additive is selected from emulsifiers; pigments; fillers; extenders; antimigration aids; curing agents; coalescents; surfactants (e.g., nonionic surfactants); spreading agents; dust suppressing agents (e.g., mineral oil dust suppressing agents); biocides; plasticizers; organosilanes; antifoaming agents (e.g., dimethicones, silicone oils and ethoxylated nonionics); corrosion inhibitors (e.g., corrosion inhibitors effective at pH<4, e.g., thioureas, oxalates and chromates); colorants; antistatic agents; lubricants; waxes; antioxidants; coupling agents (e.g., organo silicon oils available from Dow-Corning Corporation; A0700, A0750 and A0800 available from Petrarch Systems; A1160 available from Dow Chemical Corporation and Silquest™ A-187 available from GE Silicones--OSi Specialties); polymers; waterproofing agents (e.g., silicones and emulsion polymers, such as emulsion polymers containing, as copolymerized units, greater than 30wt%--based on the weight of the emulsion polymer solidsethylenically unsaturated acrylic monomer containing a C₅ or greater alkyl group); wetting agents; lignin; and, combinations thereof.

In some embodiments of the present invention, the binder composition may further comprise an emulsion polymer. The term "emulsion polymer" used herein and in the appended claims refers to polymers dispersed in an aqueous medium and that have been prepared by an emulsion polymerization technique. In some aspects of these embodiments, the emulsion polymer may be selected from, for example a copolymer comprising polymerized ethylenically unsaturated (meth)acrylic monomers.

In some embodiments of the present invention, the step-reaction copolymer has at least one ethylenic unsaturation per cyclic anhydride moiety, alternatively at least 0.5 ethylenic unsaturation per cyclic anhydride moiety, alternatively at least 0.75 ethylenic unsaturation per cyclic anhydride moiety, alternatively at least 0.8 ethylenic unsaturation per cyclic anhydride moiety, alternatively 0.9 ethylenic unsaturation per cyclic anhydride moiety, alternatively at least 1 ethylenic unsaturation per cyclic anhydride moiety contained in the step-reaction copolymer.

In some embodiments of the present invention, the step-reaction copolymer exhibits a weight average molecular weight of ≤ 100,000; alternatively 1,000 to 100,000; alternatively 3,000 to 75,000; alternatively 3,000 to 50,000; alternatively 3,000 to 20,000.

In some embodiments of the present invention, the cured binder composition provides a strong bond with sufficient elasticity and thickness recovery to permit reasonable shipping and in-service deformation of the composite material.

In some embodiments of the present invention, the composite material is moisture resistant so that it does not swell under humid conditions.

In some embodiments of the present invention, the binder composition is odor free and non-corrosive to metals it contacts during processing to prepare the composite materials of the present invention.

In some embodiments of the present invention, the binder composition is formaldehyde-free.

In some embodiments of the present invention, the composite material is formaldehyde-free.

In some embodiments of the present invention, the method for preparing the composite material, comprises: (a) providing a binder composition comprising a step-reaction copolymer of at least one cyclic anhydride and at least one epoxy alcohol; wherein one of the at least one cyclic anhydride is selected from maleic anhydride, itaconic anhydride and combinations thereof; and, wherein one of the at least one epoxy alcohol has only one epoxy group.

In some embodiments of the present invention, the method of preparing the composite material, comprises: (a) providing a binder composition comprising a step-reaction copolymer of at least one cyclic anhydride and at least one epoxy alcohol; wherein one of the at least one cyclic anhydride comprises at least two cyclic anhydrides; wherein one of the at least two cyclic anhydrides is selected from maleic anhydride, itaconic anhydride and combinations thereof; and one of the at least two cyclic anhydrides is selected from phthalic anhydride, tetrahydrophthalic anhydride, dodecenylsuccinic anhydride, chlorendic anhydride, pyromellitic anhydride, citraconic anhydride, hexahydrophthalic anhydride, endomethylene tetrahydrophthalic anhydride, tetrachlorophthalic anhydride and combinations thereof; and, wherein one of the at least one epoxy alcohol has only one epoxy group. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is maleic anhydride, itaconic anhydride or a combination thereof. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is maleic anhydride. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is itaconic anhydride. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two cyclic anhydrides is a combination of maleic anhydride and itaconic anhydride.

In some embodiments of the present invention, the method of preparing the composite material, comprises: (a) providing a binder composition comprising a step-reaction copolymer produced from at least one cyclic anhydride and at least one epoxy alcohol, wherein one of the at least one epoxy alcohol is selected from glycidol; a monoglycidyl ether of a polyhydric alcohol; a monoglycidyl ether of bisphenol A; a monoglycidyl ether of glycerol; a monoglycidyl ether of pentaerythritol; and, combinations thereof. In some aspects of these embodiments, the at least one epoxy alcohol is glycidol.

In some embodiments of the present invention, the method for preparing the composite material, comprises: (a) providing a binder composition comprising a step-reaction copolymer of at least one cyclic anhydride and at least one epoxy alcohol; wherein the at least one epoxy alcohol comprises at least two epoxy alcohols; and, wherein one of the at least two epoxy alcohols has only one epoxide group and one of the at least two epoxy alcohols has at least two epoxy groups. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two epoxy alcohols is selected from an epoxy alcohol exhibiting only one epoxide group. In some aspects of these embodiments, at least 50 mol%, alternatively at least 75 mol%, alternatively at least 80 mol%, alternatively at least 90 mol%, alternatively at least 95 mol%, alternatively at least 99 mol% of the at least two epoxy alcohols is selected from glycidol; a monoglycidyl ether of a polyhydric alcohol; a monoglycidyl ether of bisphenol A; a monoglycidyl ether of glycerol and a monoglycidyl ether of pentaerythritol. Is some aspects of these embodiments, at least 50 mol%, alternatively at least 75 mol%, alternatively at least 80 mol%, alternatively at least 90 mol%, alternatively at least 95 mol%, alternatively at least 99 mol% of the at least two epoxy alcohols is glycidol. In some aspects of these embodiments, one of the at least two epoxy alcohols is selected from glycidol; a monoglycidyl ether of a polyhydric alcohol; a monoglycidyl ether of bisphenol A; a monoglycidyl ether of glycerol and a monoglycidyl ether of pentaerythritol; and, one of the at least two epoxy alcohols is selected from a diglycidyl ether of glycerol; a diglycidyl ether of pentaerythritol; a triglycidyl ether of pentaerythritol; 2,3-epoxy-1-butanol; 2,3-epoxy-1,4-butanediol; 3,4-epoxy-1-butanol; and, combinations thereof.

In some embodiments of the present invention, the binder composition may be provided as an aqueous solution or aqueous dispersion. In some aspects of these embodiments, the binder composition may further comprise a base or surfactant, which may be added to promote the solubility or dispersibility of the step-reaction copolymer in aqueous solution or aqueous dispersion, respectively. The water present in the binder composition may be substantially removed during processing to prepare the composite material. The removal of the water (drying) may take place in succession with curing or simultaneously with curing. That is, the drying and curing may occur in one process step or in two or more distinct process steps.

In some embodiments of the present invention, the method further comprises: adding a polymerization initiator to the step-reaction copolymer. In some aspects of these embodiments, a sufficient amount of polymerization initiator is added to the step-reaction copolymer to provide a binder composition comprising 0.5 to 10wt% (based on binder solids) of polymerization initiator.

In some embodiments of the present invention, the method further comprises: adding an accelerator to the step-reaction copolymer. In some aspects of these embodiments, a sufficient amount of accelerator is added to the step-reaction copolymer to provide a binder composition comprising 0.01 to 10wt%, alternatively 0.1 to 5wt%, alternatively 0.5 to 2wt% (based on binder solids) of accelerator.

In some embodiments of the present invention, the method further comprises: adding a crosslinking agent to the step-reaction copolymer. In some aspects of these embodiments, a sufficient amount of crosslinking agent is added to the step-reaction copolymer to provide a binder composition comprising 1.0 to 10wt% (based on binder solids) of crosslinking agent.

In some embodiments of the present invention, the method further comprises: adding a silane coupling agent to the step-reaction copolymer. In some aspects of these embodiments, a sufficient amount of the silane coupling agent is added to the step-reaction copolymer to provide a binder composition comprising 0.05 to 2wt%, alternatively 0.1 to 2wt%, 0.1 to 0.5wt% (based on binder solids) of silane coupling agent.

In some embodiments of the present invention, the method further comprises: adding an additive to the step-reaction copolymer, wherein the additive is selected from any conventional additives compatible with the step-reaction copolymer and the substrate material. In some aspects of these embodiments, the method further comprises: adding an additive to the step-reaction copolymer, wherein the additive is selected from emulsifiers; pigments; fillers; extenders; antimigration aids; curing agents; coalescents; surfactants (e.g., nonionic surfactants); spreading agents; dust suppressing agents (e.g., mineral oil dust suppressing agents); biocides; plasticizers; organosilanes; antifoaming agents (e.g., dimethicones, silicone oils and ethoxylated nonionics); corrosion inhibitors (e.g., corrosion inhibitors effective at pH<4, e.g., thioureas, oxalates and chromates); colorants; antistatic agents; lubricants; waxes; antioxidants; coupling agents (e.g., organo silicon oils available from Dow-Corning Corporation; A0700, A0750 and A0800 available from Petrarch Systems; A1160 available from Dow Chemical Corporation and Silquest™ A-187 available from GE Silicones--OSi Specialties); polymers; waterproffing agents (e.g., silicones and emulsion polymers, such as emulsion polymers containing, as copolymerized units, greater than 30wt%--based on the weight of the emulsion polymer solidsethylenically unsaturated acrylic monomer containing a C₅ or greater alkyl group); wetting agents; lignin; and, combinations thereof.

In some embodiments of the present invention, the binder composition is applied to the substrate material for the purpose of coating the substrate material, sizing the substrate material, saturating the substrate material, bonding the substrate material or a combination thereof.

In some embodiments of the present invention, the binder composition is applied to the substrate material by conventional techniques including, for example, air or airless spraying, padding, saturating, roll coating, curtain coating, beater deposition, coagulation and combinations thereof.

In some embodiments of the present invention, the binder composition is applied to the substrate material in a sufficient amount such that the cured binder composition constitutes 0.5 to 40wt%, alternatively 1 to 40wt%, alternatively 1 to 30wt%, alternatively 1 to 20wt%, alternatively 5 to 15wt% of the composite material.

In some embodiments of the present invention, the binder composition is cured in (d) by subjecting the product of (c) to a temperature above 100°C, alternatively 100 to 350°C, alternatively 100 to 250°C, alternatively 125 to 250°C; for a period of ≥ 3 seconds, alternatively 3 seconds to 30 minutes, alternatively 3 seconds to 15 minutes.

In some embodiments of the present invention, the binder composition is sufficiently stable to facilitate preparation of the binder composition ≥ 4 hours before application to the substrate material.

In some embodiments of the present invention, the composite material of the present invention may be used as, or in, a variety of products. In some aspects of these embodiments, these products may include, for example, insulation, reinforcing mat for roofing or flooring applications, roving, microglass based material for printed circuit boards, microglass based material for battery separators, filter stock, tape stock, reinforcement scrim for cementitious or non-cemetitious masonry coatings, ceiling tiles, cellulosic roofing tiles, window treatments and wall coverings. In some aspects of these embodiments, the product is selected from chipboard, fiberboard, automotive interior lining, insulating material and fiber web material. In some aspects of these embodiments, the product is a "**heat resistant product**". The term "**heat resistant product**" as used herein and in the appended claims refers to a product that contains a heat resistant substrate material. In some aspects of these embodiments, the heat resistant product is a "**heat resistant fiber insulation product"**. The term "**heat resistant fiber insulation product**" as used herein and in the appended claims refers to an insulation product that contains a heat resistant fiber substrate material. In some aspects of these embodiments, the heat resistant fiber insulation product is provided in the form of a mat or blanket. The terms "**mat**" and **"blanket"** are used herein and in the appended claims to embrace heat resistant fiber containing composite materials exhibiting a range of different thicknesses and densities. In some embodiments, these mats or blankets may comprise entangling short staple fibers, long continuous fibers or combinations thereof.

Some embodiments of the present invention will now be described in detail in the following Examples. All fractions and percentages set forth below in the Examples are by weight unless otherwise specified.

### Example 1

### Step-reaction copolymer synthesis

To a 500 ml, four necked flask with a stirrer, a condenser and a nitrogen purge was added 100 grams of maleic anhydride, 20 grams of dimethoxyethane and 80 grams of glycidol. The contents of the flask were heated from room temperature to 75°C over a period of one hour with agitation. The contents of the flask were then maintained at 75°C for an hour with agitation. The contents of the flask were then heated from 75°C to 125°C over the period of an hour with agitation. The contents of the flask were then maintained at 125°C for 30 minutes with agitation. The dimethoxyethane was then removed under vacuum leaving a viscous polymer product with a molecular weight determined by GPC to be 4,884.

### Example 2

### Step-reaction copolymer synthesis

To a 500 ml, four necked flask with a stirrer, a condenser and a nitrogen purge was added 80 grams of maleic anhydride, 20 grams of phthalic anhydride, 20 grams of dimethoxyethane and 80 grams of glycidol. This contents of the flask were heated from room temperature to 75°C over the period of an hour with agitation. The contents of the flask were maintained at 75°C for an hour with agitation. The contents of the flask were then heated from 75°C to 125°C over the period of an hour with agitation. The contents of the flask were then maintained at 125°C for 30 minutes with agitation. The dimethoxyethane was then removed under vacuum leaving a viscous polymer with a molecular weight determined by GPC to be 4,000.

### Example 3

### Dynamic Mechanical Testing on a Fiberglass Filter Paper Substrate Material

### Instrument used:

A Dynamic Mechanical Analyzer ("DMA") available from TA Instruments, Inc. as Model # DMA 2980, using a dual cantilever clamp. In this geometry, the test sample was affixed at 3 points with the middle point oscillating at a given frequency. As crosslinking occurs in the test samples, the test sample exhibits increased dimensional stability and the oscillation of the middle point is dampened. This dampening behavior was converted into a response signal outputted by the DMA.

### Test Conditions:

The temperature ramp used to perform the following analyses was 4°C/min from 30°C to 250°C.

For each test, a separate aqueous solution was prepared. The aqueous solutions contained **distilled/deionized water**, a small amount of ammonium hydroxide and the polymer identified in **Table 1**. Each of these aqueous solutions contained about 30wt% solids.

The substrate material used to prepare the test samples for the following analyses comprised two, staked pieces of Whatman® GF/B filter paper, 0.5" x 1.34". To this substrate material was then added about 0.300 g (approx. 4 drops/piece of filter paper) of an aqueous solution containing a polymer (about 30wt%) to provide the test sample for analysis. The results of the analyses of these test samples are provided in **Table 1.**

**Table 1**

| | **Cure Temperature** | | |
|---|---|---|---|
| **Polymer** | **Onset** | **Completion** | **Delta** |
| Polymer Product of Example 1 | 173 °C | 206 °C | 33 °C |
| Polymer Product of Example 2 | 177 °C | 248 °C | 71 °C |
| Conventional Binder Formulation (polyacrylic acid, MW_{w} 4,000 with triethanolamine polyol crosslinker) | 191 °C | 260 °C | 69 °C |

## Claims

1. A composite material comprising:
(a) a substrate material selected from fibers, slivers, chips and combinations thereof; and,
(b) a cured binder composition comprising a step-reaction copolymer produced from at least one cyclic anhydride and at least one epoxy alcohol, wherein one of the at least one epoxy alcohol has only one epoxy group; and,
wherein the composite material comprises ≤ 40 wt% cured binder composition.

2. The composite material of claim 1, wherein the at least one cyclic anhydride is selected from maleic anhydride, itaconic anhydride and combinations thereof.

3. The composite material of claim 1, wherein the at least one cyclic anhydride comprises at least two cyclic anhydrides, wherein one of the at least two cyclic anhydrides is selected from maleic anhydride, itaconic anhydride and combinations thereof; and one of the at least two cyclic anhydrides is selected from phthalic anhydride, tetrahydrophthalic anhydride, dodecenylsuccinic anhydride, chlorendic anhydride, pyromellitic anhydride, citraconic anhydride, hexahydrophthalic anhydride, endomethylene tetrahydrophthalic anhydride and tetrachlorophthalic anhydride.

4. The composite material of claim 1, wherein the at least one epoxy alcohol is glycidol.

5. The composite material of claim 1, wherein the at least one epoxy alcohol comprises at least two epoxy alcohols, wherein one of the at least two epoxy alcohols is glycidol and one of the at least two epoxy alcohols is selected from a monoglycidyl ether of a polyhydric alcohol; a monoglycidyl ether of glycerol; a diglycidyl ether of glycerol; a monoglycidyl ether of pentaerythritol; a diglycidyl ether of pentaerythritol; a triglycidyl ether of pentaerythritol; 2,3-epoxy-1-butanol; 2,3-epoxy-1,4-butanediol; 3,4-epoxy-1-butanol and combinations thereof.

6. The composite material of claim 1, further comprising an additive.

7. A product comprising the composite material of claim 1.

8. The product of claim 7, wherein the product is selected from chipboard, fiberboard, automotive interior lining, insulating material and fiber web.

9. The product of claim 7, wherein the product is selected from insulation, reinforcing mat for roofing or flooring applications, roving, microglass based substrate material for printed circuit boards, microglass based substrate material for battery separators, filter stock, tape stock, reinforcement scrim for cementitious or non-cemetitious masonry coatings, ceiling tiles, cellulosic roofing tiles, window treatments and wall coverings.

10. A method for preparing a composite material, comprising:
(a) providing a binder composition comprising a step-reaction copolymer produced from at least one cyclic anhydride and at least one epoxy alcohol, wherein one of the at least one epoxy alcohol has only one epoxy group;
(b) providing a substrate material selected from fibers, slivers, chips and combinations thereof;
(c) treating the substrate material with the binder composition; and,
(d) curing the binder composition;
wherein the composite material comprises ≤ 40 wt% of the cured binder composition.

## Patentansprüche

1. Verbundmaterial, umfassend:
(a) ein Substratmaterial, ausgewählt aus Fasern, Splittern bzw. Spänen, Chips und Kombinationen davon, und
(b) eine ausgehärteten Bindemittelzusammensetzung, umfassend ein Stufenreaktions-Copolymer, hergestellt aus zumindest einem zyklischen Anhydrid und zumindest einem Epoxyalkohol, wobei einer des zumindest einen Epoxyalkohols nur eine Epoxygruppe aufweist, und wobei das Verbundmaterial ≤ 40 Gew.-% der ausgehärteten Bindemittelzusammensetzung umfaßt.

2. Verbundmaterial nach Anspruch 1, wobei das zumindest eine zyklische Anhydrid aus Maleinsäureanhydrid, Itaconsäureanhydrid und Kombinationen davon ausgewählt ist.

3. Verbundmaterial nach Anspruch 1, wobei das zumindest eine zyklische Anhydrid zumindest zwei zyklische Anhydride umfaßt, wobei eines der zumindest zwei zyklischen Anhydride aus Maleinsäureanhydrid, Itaconsäureanhydrid und Mischungen davon ausgewählt ist, und eines der zumindest zwei zyklischen Anhydride aus Phthalsäureanhydrid, Tetrahydrophthalsäureanhydrid, Dodecenylbernsteinsäureanhydrid, 3,4,5,6,7,7-Hexachlor-3,6-Endomethylen-Δ⁴-Tetrahydrophthalsäureanhydrid, Pyromellitsäureanhydrid, Citraconsäureanhydrid, Hexahydrophthalsäureanhydrid, Endomethylentetrahydrophthalsäureanhydrid und Tetrachlorphthalsäureanhydrid ausgewählt ist.

4. Verbundmaterial nach Anspruch 1, wobei der zumindest eine Epoxyalkohol Glycidol ist.

5. Verbundmaterial nach Anspruch 1, wobei der zumindest eine Epoxyalkohol zumindest zwei Epoxyalkohole umfaßt, wobei einer der zumindest zwei Epoxyalkohole Glycidol ist und einer der zumindest zwei Epoxyalkohole aus einem Monoglycidylether eines Polyols, einem Monoglycidylether von Glyzerin, einem Diglycidylether von Glyzerin, einem Monoglycidylether von Pentaerythritol, einem Diglycidylether von Pentaerythritol, einem Triglycidylether von Pentaerythritol, 2,3-Epoxy-1-butanol, 2,3-Epoxy-1,4-butandiol, 3,4-Epoxy-1-butanol und Kombinationen davon ausgewählt ist.

6. Verbundmaterial nach Anspruch 1, weiter einen Zusatzstoff umfassend.

7. Produkt, umfassend das Verbundmaterial nach Anspruch 1.

8. Produkt nach Anspruch 7, wobei das Produkt ausgewählt ist aus Spanplatte, Faserplatte, Kraftfahrzeuginnenauskleidung, Isoliermaterial und Faserflor.

9. Produkt nach Anspruch 7, wobei das Produkt aus Isolierung, Verstärkungsmatte für Bedachungs- oder Bodenbelaganwendungen, Roving, dünnglasbasierten Substratmaterialien für gedruckte Leiterplatten, dünnglasbasierten Substratmaterialien für Batterieseparatoren, Filtermaterial, Bandmaterial, Gewebeverstärkung für zementartige oder nichtzementartige Mauerputze, Dekkenfliesen, zellulosehaltigen Dachsteinen, Fensterbehandlungen und Wandbelägen ausgewählt ist.

10. Verfahren zur Herstellung eines Verbundmaterials, umfassend:
(a) Bereitstellen einer Bindemittelzusammensetzung, umfassend ein Stufenreaktions-Copolymer, hergestellt aus zumindest einem zyklischen Anhydrid und zumindest einem Epoxyalkohol, wobei einer des zumindest einen Epoxyalkohols nur eine Epoxygruppe aufweist,
(b) Bereitstellen eines Substratmaterials ausgewählt aus Fasern, Splittern bzw. Spänen, Chips und Kombinationen davon,
(c) Behandeln des Substratmaterials mit der Bindemittelzusammensetzung, und
(d) Aushärten der Bindemittelzusammensetzung, wobei das Verbundmaterial ≤ 40 Gew.-% der ausgehärteten Bindemittelzusammensetzung umfaßt.

## Revendications

1. Matériau composite comprenant :
(a) un matériau de substrat choisi parmi des fibres, des éclats, des copeaux et des combinaisons de ceux-ci ; et,
(b) une composition de liant durci comprenant un copolymère de réaction en deux temps produit à partir d'au moins un anhydride cyclique et d'au moins un alcool époxy, où l'un de l'au moins un alcool époxy a un seul groupe époxy ; et,
dans lequel le matériau composite comprend ≤ 40 % en poids de composition de liant durci.

2. Matériau composite selon la revendication 1, dans lequel le au moins un anhydride cyclique est choisi parmi l'anhydride maléique, l'anhydride itaconique et des combinaisons de ceux-ci.

3. Matériau composite selon la revendication 1, dans lequel le au moins un anhydride cyclique comprend au moins deux anhydrides cycliques, dans lequel l'un des au moins deux anhydrides cycliques est choisi parmi l'anhydride maléique, l'anhydride itaconique et des combinaisons de ceux-ci ; et l'un des au moins deux anhydrides cycliques est choisi parmi l'anhydride phtalique, l'anhydride tétrahydrophtalique, l'anhydride dodécénylsuccinique, l'anhydride chlorendique, l'anhydride pyromellitique, l'anhydride citraconique, l'anhydride hexahydrophtalique, l'anhydride endométhylène tétrahydrophtalique et l'anhydride tétrachlorophtalique.

4. Matériau composite selon la revendication 1, dans lequel le au moins un alcool époxy est le glycidol.

5. Matériau composite selon la revendication 1, dans lequel le au moins un alcool époxy comprend au moins deux alcools époxy, dans lequel l'un des au moins deux alcools époxy est le glycidol et l'un des au moins deux alcools époxy est choisi parmi un monoglycidyl éther d'un alcool polyhydrique ; un monoglycidyl éther de glycérol ; un diglycidyl éther de glycérol ; un monoglycidyl éther de pentaérythritol ; un diglycidyl éther de pentaérythritol ; un triglycidyl éther de pentaérythritol ; le 2,3-époxy-1-butanol ; le 2,3-époxy-1,4-butanediol ; le 3,4-époxy-1-butanol et des combinaisons de ceux-ci.

6. Matériau composite selon la revendication 1, comprenant en outre un additif.

7. Produit comprenant le matériau composite selon la revendication 1.

8. Produit selon la revendication 7, dans lequel le produit est choisi parmi un aggloméré, un panneau de fibres, un revêtement interne automobile, un matériau isolant et une bande en fibre.

9. Produit selon la revendication 7, dans lequel le produit est choisi parmi un treillis d'armature d'isolation pour des applications de couverture ou de revêtement de sol, une mèche, un matériau de substrat à base de microverre pour des cartes de circuit imprimé, un matériau de substrat à base de microverre pour des séparateurs de pile, un matériau filtrant, un matériau de bande, un renfort tissé pour des revêtements de maçonnerie cimentaire ou non cimentaire, des dalles de plafond, des tuiles cellulosiques, des traitements pour fenêtres et des panneaux muraux.

10. Procédé de préparation d'un matériau composite, comprenant les étapes consistant à :
(a) fournir une composition de liant comprenant un copolymère de réaction en deux temps produit à partir d'un anhydride cyclique et d'au moins un alcool époxy, dans lequel l'un du au moins un alcool époxy a seulement un groupe époxy ;
(b) fournir un matériau de substrat choisi parmi des fibres, des éclats, des copeaux et des combinaisons de ceux-ci ;
(c) traiter le matériau de substrat avec la composition de liant ; et,
(d) durcir la composition de liant ;
dans lequel le matériau composite comprend ≤ 40 % en poids de la composition de liant durci.
